(19) Europäisches Patentamt
European Patent Office
Office européen des brevets

(11) **EP 2 961 013 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(51) Int Cl.:
**H02B 1/052** *(2006.01)*   **H02B 1/56** *(2006.01)*

(21) Anmeldenummer: **15171333.6**

(22) Anmeldetag: **10.06.2015**

(54) **VORRICHTUNG ZUR AUFNAHME ELEKTRISCHER GERÄTE MIT MINDESTENS EINEM KÜHLKÖRPER**

DEVICE FOR ACCOMMODATING ELECTRIC DEVICES WITH AT LEAST ONE HEATSINK

DISPOSITIF DE RECEPTION D'APPAREILS ÉLECTRIQUES AVEC AU MOINS UN DISSIPATEUR DE CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2014 DE 102014109049**

(43) Veröffentlichungstag der Anmeldung:
**30.12.2015 Patentblatt 2015/53**

(73) Patentinhaber: **PHOENIX CONTACT GmbH & Co. KG**
**32825 Blomberg (DE)**

(72) Erfinder: **Schaper, Elmar**
**32676 Lügde (DE)**

(56) Entgegenhaltungen:
**DE-B4-102008 059 320     JP-A- H09 162 574**
**US-B1- 6 563 710**

EP 2 961 013 B1

**Beschreibung**

Die Erfindung betrifft eine Vorrichtung zur Aufnahme elektrischer Geräte nach dem Oberbegriff des Anspruchs 1.

Eine derartige Vorrichtung umfasst eine Wand mit mindestens einer daran befestigten Tragschiene, an welcher die elektrischen Geräte anzuordnen sind. Die elektrischen Geräte können beispielsweise Stromversorgungsgeräte, Umrichter, Trennverstärker oder Reihenklemmen sein. Während ihres Betriebes erzeugen die elektrischen Geräte Wärme, die abgeführt werden soll. Ferner stellen auch in einer Reihenklemme stromdurchflossene Leiter wärmeerzeugende Komponenten dar, die sich und die gesamte Reihenklemme erheblich erhitzen können, wenn die Stromstärke entsprechend hoch ist. Die Wand kann z. B. Teil eines Schaltschrankes sein. Um die Wärme, die durch die elektrischen Geräte während ihres Betriebes erzeugt wird, abzuführen und ein Aufheizen der elektrischen Geräte zu vermeiden, umfasst die Vorrichtung ferner mindestens einen Kühlkörper zum Kühlen mindestens eines der elektrischen Geräte. Der Kühlkörper steht in thermischem Kontakt mit dem zugeordneten elektrischen Gerät, wenn dieses bestimmungsgemäß an der Tragschiene angeordnet ist. Der Ausdruck "in thermischem Kontakt" bezeichnet dabei sowohl einen direkten thermischen Kontakt, bei dem sich der Kühlkörper und das elektrische Gerät berühren, als auch einen indirekten thermischen Kontakt, bei dem sich der Kühlkörper und das elektrische Gerät nicht direkt berühren, aber über mindestens ein wärmeübertragendes Medium thermisch in Verbindung stehen. Die Anzahl der Kühlkörper kann dabei variabel an die Anzahl der elektrischen Geräte anpassbar sein, so dass beispielsweise jedem elektrischen Gerät ein Kühlkörper zuordenbar ist.

Die Kühlkörper und die elektrischen Geräte können beispielsweise alternierend (in einer Sandwich-Anordnung) aneinander gereiht sein. Eine derartige Vorrichtung mit einer Sandwich-Anordnung der Kühlkörper und der elektrischen Geräte ist beispielsweise aus der DE 10 2008 059 320 B4 bekannt. Sowohl die Kühlkörper als auch die elektrischen Geräte sind dabei auf eine Tragschiene in Form einer Hutschiene aufgesetzt und stehen in thermischem Kontakt mit letzterer. Die Tragschiene ist wiederum an einem Träger eines Schaltschranks befestigt. Von besonderer Bedeutung ist bei solchen Vorrichtungen eine effiziente Ableitung der von den elektrischen Geräten erzeugten Wärme, um der Gefahr einer Überschreitung der zulässigen Temperaturen in einem jeweiligen Gerät zu begegnen.

Der Erfindung liegt die Aufgabe zugrunde, eine Vorrichtung zur Aufnahme elektrischer Geräte zu schaffen, die sich durch eine effiziente Abführung der durch die elektrischen Geräte erzeugten Wärme auszeichnet.

Dieses Problem wird erfindungsgemäß durch eine Vorrichtung mit den Merkmalen des Anspruchs 1 gelöst.

Danach ist bei einer Vorrichtung der eingangs genannten Art weiter vorgesehen, dass der Kühlkörper an der Wand anliegt. Hierdurch kann die von den elektrischen Geräten erzeugte Wärme über einen jeweiligen Kühlkörper effizient an die Wand abgegeben werden. Dabei kann der Kühlkörper direkt an der Wand anliegen und somit in direktem thermischen Kontakt mit der Wand stehen. Gelegentlich ist die Oberfläche der Wand aufgrund der Oberflächenbearbeitung jedoch uneben. Um derartige Unebenheiten, die die Effizienz der Wärmeübertragung zwischen Kühlkörper und Wand beeinträchtigen können, auszugleichen, kann zwischen der Wand und dem Kühlkörper ein Wärmeleitmedium vorgesehen sein, das ausgebildet ist, die Unebenheiten auszugleichen und somit die Wärmeleitung zwischen dem Kühlkörper und der Wand zu verbessern. Das Wärmeleitmedium kann beispielsweise eine Wärmeleitpaste, ein Wärmeleitkleber oder ein (plastisch und/oder elastisch verformbares, formfestes) Wärmeleitpad sein. Letzteres kann insbesondere durch einen wärmleitfähigen Kunststoff, vorzugesweise auf Elastomer-Basis, gebildet werden. Bei Verwendung eines derartigen wärmeleitenden Mediums liegt der Kühlkörper an der Wand an und steht über das Wärmeleitmedium in thermischem Kontakt mit der Wand. Derartige Wärmeleitmedien können auch zwischen dem elektrischen Gerät und dem Kühlkörper aufgetragen werden, um die Effizienz der Wärmeübertragung zu erhöhen.

Der Kühlkörper weist eine Basisseite auf, die (direkt bzw. über das Wärmeleitmedium) in thermischem Kontakt mit der Wand steht. Der Kühlkörper kann mindestens einen Schenkel aufweisen, der von der Basisseite absteht und der mit einem zugeordneten elektrischen Gerät in thermischem Kontakt steht, wenn dieses bestimmungsgemäß an der Tragschiene angeordnet ist. Dabei kann der Kühlkörper mit seiner Basisseite insbesondere flächig an der Wand anliegen.

Weiterhin kann der Kühlkörper über seine Basisseite an der Wand befestigt sein. Alternativ oder zusätzlich kann der Kühlkörper an der Tragschiene festgelegt sein. Da das zu kühlende elektrische Gerät an der Tragschiene angeordnet wird, ist auch der Kühlkörper, der in thermischem Kontakt mit dem elektrischen Gerät stehen soll, im Bereich der Tragschiene vorzusehen, selbst wenn der Kühlkörper nicht an der Tragschiene befestigt wird.

Damit seine Basisseite flächig an die Wand anlegbar ist, weist der Kühlkörper eine an der Basisseite ausgebildete Ausnehmung auf, die zur Aufnahme der Tragschiene vorgesehen ist. Hierdurch kann sich der Kühlkörper über die Tragschiene hinaus bis an die Wand erstrecken. Die Ausnehmung des Kühlkörpers kann ferner gewährleisten, dass die Tragschiene zur Befestigung eines elektrischen Geräts an der Tragschiene zugänglich ist, wenn bereits der Kühlkörper an der Tragschiene befestigt ist. Das elektrische Gerät kann z. B. derart an der Tragschiene befestigt werden, dass seine Befestigungselemente durch die Ausnehmung in der Basisseite des Kühlkörpers ragen und mit der Tragschiene zusammenwirken.

Die Ausnehmung ist so angeordnet und ausgebildet, dass sie die Basisseite des Kühlkörpers in zwei voneinander beabstandete Kontaktbereiche unterteilt, über die der Kühlkörper jeweils an der Wand anliegt. Hierbei kann der Kühlkörper die Tragschiene an drei Seiten umschließen.

Nach einer Ausführungsform weist der Kühlkörper einen einzelnen von dessen Basisseite abstehenden Schenkel auf. Der Schenkel kann einerseits derart bezüglich der Basisseite angeordnet sein, dass der Kühlkörper im Querschnitt L-förmig ist. Das zu kühlende elektrische Gerät lässt sich dann so an der Tragschiene befestigen, dass es sowohl an der Basisseite als auch an dem Schenkel des Kühlkörpers anliegt und dementsprechend mit der Basisseite und dem Schenkel in (direktem) thermischem Kontakt steht.

Andererseits kann der Kühlkörper im Querschnitt I-förmig ausgeführt sein. Hierbei erstreckt sich der Schenkel z.B. über die gesamte Basisseite und steht von dieser ab. Bei einem solchen Kühlkörper liegt das bestimmungsgemäß angeordnete elektrische Gerät an einer Seite des Schenkels an und steht mit dieser in (direktem) thermischem Kontakt.

Gemäß einer anderen Ausführungsform weist der Kühlkörper zwei Schenkel auf, die zusammen mit der Basisseite eine im Querschnitt U-förmigen Kühlkörper bilden. Hierbei kann das elektrische Gerät in einem Aufnahmebereich des Kühlkörpers, der zwischen den beiden Schenkeln und der Basisseite gebildet ist, angeordnet werden, so dass es mit jedem der beiden Schenkel und auch mit der Basisseite in thermischem Kontakt steht.

Bei dieser Ausführungsform kann sich weiterhin die Ausnehmung von der Basisseite bis in die Schenkel erstrecken. Am Übergang zwischen der Ausnehmung und den Schenkeln können Vorsprünge vorgesehen sein, die in die Ausnehmung ragen und die die Tragschiene zur Befestigung des Kühlkörpers an der Tragschiene hintergreifen können.

Der Kühlkörper kann in einfacher Weise über eine Rastverbindung an der Tragschiene befestigbar sein. Hierzu können beispielsweise elastische Vorsprünge (des Kühlkörpers) vorgesehen sein, die in die Ausnehmung des Kühlkörpers ragen und die Tragschiene hintergreifen. Weiterhin kann der Kühlkörper zur Befestigung an der Tragschiene einen ersten Vorsprung, der starr ausgebildet ist, und einen zweiten Vorsprung, der verschiebbar ausgebildet ist, aufweisen. Die Vorsprünge können an gegenüberliegenden Seiten der Ausnehmung angeordnet sein und in die Ausnehmung hineinragen. Mittels eines Bedienelementes, das an dem Kühlkörper angeordnet ist, kann der zweite Vorsprung verschoben werden, um die Tragschiene zwischen den Vorsprüngen zu verklemmen. Ferner kann zur Befestigung des Kühlkörpers an der Tragschiene eine Klammer vorgesehen sein, die derart mit der Tragschiene in Eingriff bringbar ist, dass hierbei der Kühlkörper gegen die Wand gepresst wird. Die Klammer ist beispielsweise in der Ausnehmung angeordnet.

Die Erfindung wird nachfolgend in Ausführungsbeispielen anhand der Figuren näher erläutert werden.

Es zeigen:

Fig. 1 eine schematische Darstellung einer Vorrichtung zur Aufnahme elektrischer Geräte;

Fig. 2 eine schematische Darstellung eines Kühlkörpers für eine Vorrichtung gemäß Figur 1 zusammen mit einem elektrischen Gerät;

Fig. 3 eine Detailansicht eines Befestigungsbereichs des Kühlkörpers aus Figur 2;

Fig. 4A eine Draufsicht von unten auf den Kühlkörper und das elektrische Gerät aus Figur 2 in einem an einer Tragschiene der Vorrichtung aus Figur 1 befestigten Zustand;

Fig. 4B eine Draufsicht von unten auf eine Serie von Kühlkörpern und elektrischen Geräten entsprechend Figur 2, die gemäß einer ersten Variante an einer Tragschiene der Vorrichtung aus Figur 1 befestigt sind;

Fig. 4C eine Draufsicht von unten auf eine Serie von Kühlkörpern und elektrischen Geräten entsprechend Figur 2, die gemäß einer zweiten Variante an einer Tragschiene der Vorrichtung aus Figur 1 befestigt sind;

Fig. 5 eine Draufsicht von unten auf zwei Kühlkörper gemäß einer zweiten Ausführungsform zusammen mit elektrischen Geräten in einem an einer Tragschiene der Vorrichtung befestigten Zustand;

Fig. 6 eine schematische Seitendarstellung des Kühlkörpers aus Figur 5 mit einem Befestigungselement gemäß einer ersten Variante zur Befestigung des Kühlkörpers an der Tragschiene;

Fig. 7 eine schematische Seitendarstellung des Kühlkörpers aus Figur 5 mit einem Befestigungselement gemäß einer zweiten Variante zur Befestigung des Kühlkörpers an der Tragschiene;

Fig. 8 eine schematische Seitendarstellung des Kühlkörpers aus Figur 5 mit einem Befestigungselement gemäß einer dritten Variante zur Befestigung des Kühlkörpers an der Tragschiene;

Fig. 9 eine Draufsicht auf einen Kühlkörper gemäß einer dritten Ausführungsform zusammen mit einer Tragschiene;

Fig. 10 　eine schematische Seitendarstellung des Kühlkörpers und der Tragschiene aus Figur 9;

Fig. 11 　ein Ersatzschaltbild der Wärmewiderstände der einzelnen Komponenten einer Vorrichtung gemäß Figur 1; und

Fig. 12 　eine vergleichende Darstellung der Deratingkurven einer erfindungsgemäßen Vorrichtung zur Aufnahme elektrischer Geräte und einer Vorrichtung aus dem Stand der Technik.

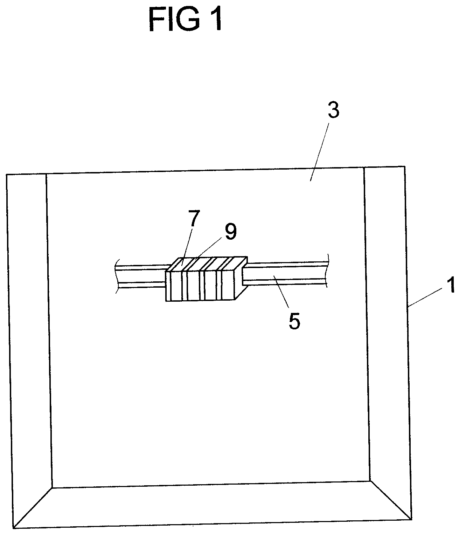

In Figur 1 ist ein Schaltschrank 1 mit einer Wand 3 in Form einer Rückwand dargestellt. An der Wand 3 ist exemplarisch eine einzelne Tragschiene 5 befestigt. Die Anzahl der an der Wand 3 befestigbaren Tragschienen 5 ist jedoch variabel. Die Tragschiene 5 und die Wand 3 sind aus einem wärmeleitfähigen Material, beispielsweise aus Metall, gefertigt und stehen in direktem oder indirektem thermischen Kontakt miteinander. An der Tragschiene 5 sind alternierend elektrische Geräte 7 und Kühlkörper 9 befestigt.

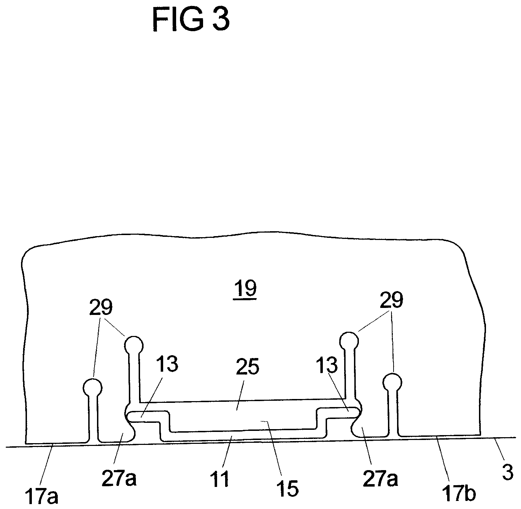

Die Tragschiene 5 ist, wie in Figur 3 gezeigt, als eine Hutschiene ausgeführt. Die Tragschiene 5 weist im Querschnitt ein U-Profil 11 auf, an dessen freien Enden sich zwei Tragstege 13 in entgegengesetzte Richtungen erstrecken. Die Tragstege 13 verlaufen im Ausführungsbeispiel in einer Ebene und sind beidseits eines Hohlraums 15 des U-Profils 11 angeordnet. Die Tragschiene 5 ist über das U-Profil 11, zum Beispiel mittels einer Schraubverbindung, derart an der Wand 3 befestigt, dass die Tragstege 13 von der Wand 3 beabstandet sind und sich im Wesentlichen parallel zur Wand 3 erstrecken. Somit können die Tragstege 13 von einem jeweiligen elektrischen Gerät 7 und einem jeweiligen Kühlkörper 9 hintergriffen werden, um das elektrische Gerät 7 bzw. den Kühlkörper 9 an der Tragschiene 5 zu befestigen.

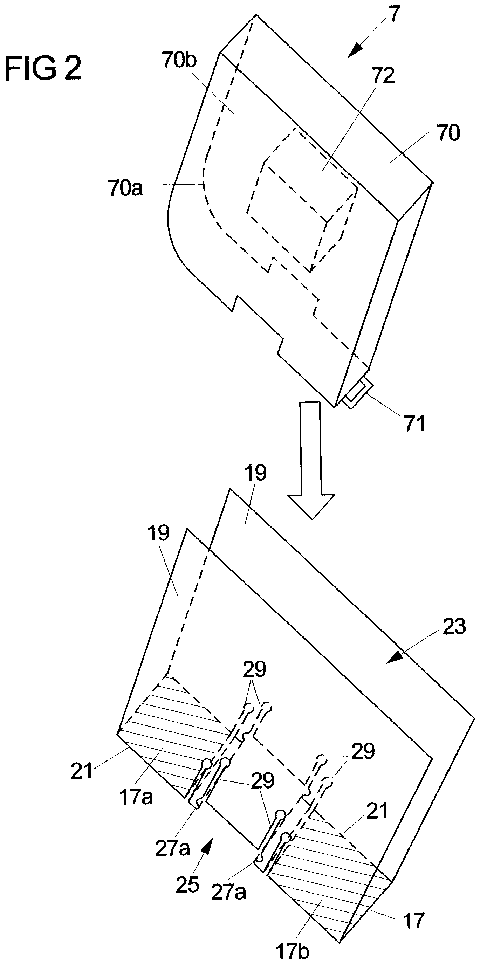

Das jeweilige elektrische Gerät 7 umfasst gemäß Figur 2 ein Gehäuse 70 mit mindestens zwei sich gegenüberliegenden (parallelen) Seiten 70a, 70b, an denen die Kühlkörper 9 flächig anliegen, wenn die elektrischen Geräte 7 und die Kühlkörper 9 gemäß Figur 1 bestimmungsgemäß an der Tragschiene 5 befestigt sind. An dem Gehäuse 70 ist ein Rasthaken 71 vorgesehen, über den das jeweilige elektrische Gerät 7 an der Tragschiene 5 befestigbar ist. In dem Gehäuse 70 ist mindestens eine wärmeerzeugende Komponente 72 angeordnet. Zur elektrischen Isolation der elektrischen Geräte 7 gegenüber den Kühlkörpern 9 ist das Gehäuse 70 der elektrischen Geräte 7 elektrisch nicht leitfähig. Beispielsweise ist das Gehäuse 70 aus einem Kunststoff gefertigt.

In Figur 2 ist ein Kühlkörper 9 gemäß einer ersten Ausführungsform gezeigt. Der Kühlkörper 9 weist eine Basisseite 17 und zwei hiervon abstehende, voneinander beabstandete (im Wesentlichen parallel zueinander verlaufende) Schenkel 19 auf. Die Schenkel 19 erstrecken sich jeweils über die gesamte Länge der Basisseite 17 quer zu der Richtung, entlang der die beiden Schenkel 19 voneinander beabstandet sind. Der Kühlkörper 9 hat im Ergebnis einen U-förmigen Querschnitt und definiert zwischen der Basisseite 17 und den Schenkeln 19 einen Aufnahmebereich 23 zur Aufnahme des elektrischen Gerätes 7, wie in Figur 2 schematisch durch einen Pfeil angedeutet ist. Der Kühlkörper 9 kann einstückig als Stanz- und Biegeteil ausgebildet sein. Er ist aus einem wärmeleitfähigen Material, beispielsweise aus einem Metall, gefertigt. Insbesondere ist der Kühlkörper aus einem Blech mit einer Wandstärke von 0,1 bis 2,0 mm, vorzugsweise von 0,5 bis 1,5 mm, gefertigt.

Zwischen den Längskanten 21 der Basisseite 17 erstreckt sich über einen Abschnitt der Länge der Basisseite 17 eine Ausnehmung 25, die in die Schenkel 19 hinein verläuft. Die Ausnehmung 25 dient der Aufnahme der Tragschiene 5. Weiterhin unterteilt die Ausnehmung 25 die Basisseite 17 in zwei beabstandete Kontaktbereiche 17a, 17b, über die der Kühlkörper 9 in thermischem Kontakt mit der Wand 3 steht. Die Ausnehmung 25 wird in den Schenkeln 19 in Längsrichtung der Basisseite 17, das heißt am jeweiligen Übergang zwischen der Ausnehmung 25 und den Kontaktbereichen 17a, 17b, durch Vorsprünge 27a begrenzt, die federnd ausgebildet sind. Die Vorsprünge 27a erstrecken sich in den Ebenen der Schenkel 19 und ragen jeweils in die Ausnehmung 25 hinein. Für eine federnde Ausgestaltung der Vorsprünge 27a ist - in Längsrichtung der Basisseite 17 betrachtet - vor und hinter jedem Vorsprung 27a eine schlitzförmige Aussparung 29 vorgesehen, die von der jeweiligen Längskante 21 in die Schenkel 19 hinein verläuft.

Um den Kühlkörper 9 an der Tragschiene zu befestigen, kann der Kühlkörper 9 von vorne (das heißt in diesem Zusammenhang in Richtung auf die Wand 3 zu, quer zur Erstreckungsrichtung der Tragschiene 5) auf die Tragschiene 5 gesteckt oder von der Seite (das heißt in diesem Zusammenhang parallel zur Wand 3, in Erstreckungsrichtung der Tragschiene 5) auf die Tragschiene 5 geschoben werden. Beim Aufstecken schieben die Tragstege 13 der Tragschiene 5 die Vorsprünge 27a des Kühlkörpers 9 auseinander und passieren diese. Die Vorsprünge 27a kehren wieder in ihre Ausgangsposition zurück, sobald die Tragstege 13 die Vorsprünge 27a passiert haben. In dieser Position hintergreifen die Vorsprünge 27a die Tragstege 13, und der Kühlkörper 9 ist an der Tragschiene befestigt.

Wenn der Kühlkörper 9 an der Tragschiene 5 befestigt ist (Figur 3), erstreckt sich die Basisseite 17 des Kühlkörpers 9 entlang einer Ebene parallel zu der Tragschiene 5, wobei die Basisseite 17 mit ihrer Längsrichtung im Wesentlichen quer zu der Tragschiene 5 ausgerichtet ist. Der Kühlkörper 9 und die Tragschiene 5 befinden sich in dieser Situation in thermischem Kontakt. Jedoch ist der thermische Kontakt vergleichsweise gering, da sich der Kühlkörper 9 und die Tragschiene 5 nur in einem kleinen Bereich berühren. Über die beiden Kontaktbereiche 17a, 17b und die Vorsprünge 27a liegt der Kühlkörper 9 zudem flächig an der Wand 3 an, wenn der Kühlkörper 9 bestimmungsgemäß an der Tragschiene 5 befestigt ist. Dabei übernehmen sowohl die Kontaktbereiche 17a, 17b als auch die Vorsprünge 27a eine wärmeleitende Funktion. Damit befindet sich der Kühlkörper 9 in direktem thermischem Kontakt mit der Wand 3.

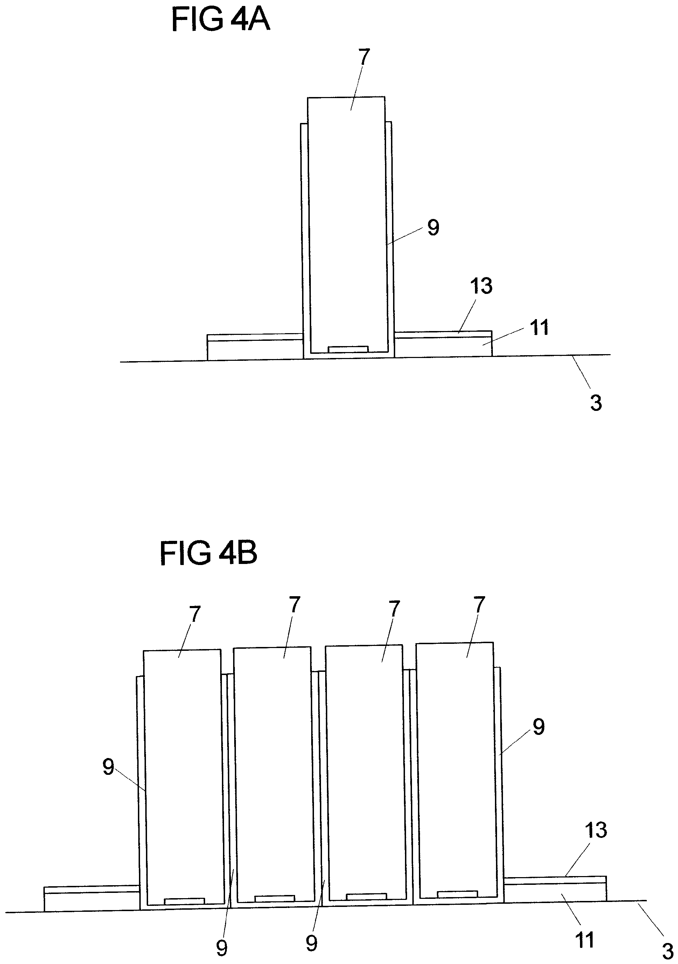

Wenn ferner das elektrische Gerät 7 an der Tragschiene 5 befestigt ist, befindet sich dieses in flächigem Kontakt mit den Schenkeln 19 des Kühlkörpers 9. Gemäß einer Ausführungsform kann sich das elektrische Gerät 7 zusätzlich in flächigem Kontakt mit den Kontaktbereichen 17a, 17b der Basisseite 17 des Kühlkörpers 9 befinden, wenn das elektrische Gerät 7 an der Tragschiene 5 befestigt ist. Somit ist das elektrische Gerät 7 sowohl mit der Tragschiene 5 als auch mit dem Kühlkörper 9 in direktem thermischem Kontakt, wobei vorliegend die Kontaktfläche zwischen dem elektrischen Gerät 7 und dem Kühlkörper 9 größer ist als die Kontaktfläche zwischen dem elektrischen Gerät 7 und der Tragschiene 5. Die von dem elektrischen Gerät 7 erzeugte Wärme wird demnach insbesondere (direkt) an den Kühlkörper 9 abgegeben. Da die Kontaktfläche zwischen dem Kühlkörper 9 und der Wand 3 größer ist als die Kontaktfläche zwischen dem Kühlkörper 9 und der Tragschiene 5, wird die Wärme von dem Kühlkörper 9 wiederum insbesondere direkt an die Wand 3 abgegeben. Diese Situation ist in Figur 4A dargestellt, die eine Ansicht von unten auf die Wand 3 mit der daran befestigten Tragschiene 5, an der wiederum der U-förmige Kühlkörper 9 und das elektrische Gerät 7 aus Figur 2 angeordnet sind, zeigt.

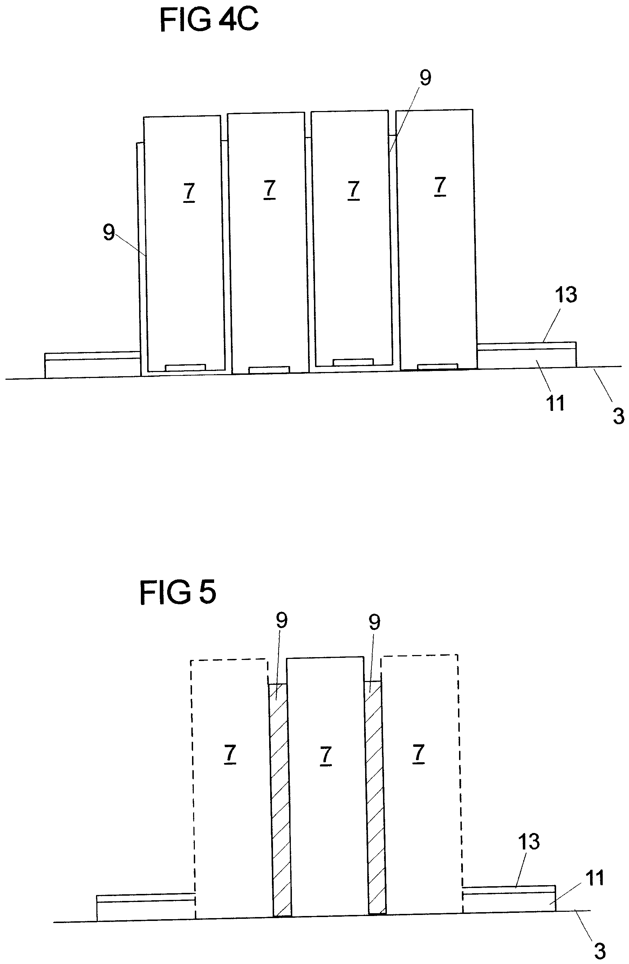

In den Figuren 4B und 4C ist beispielhaft gezeigt, wie eine Vielzahl von elektrischen Geräten 7 zusammen mit dem Kühlkörper 9 aus den Figuren 2 bis 4 an der Tragschiene 5 angeordnet sein kann. Wie in Figur 4B dargestellt, kann jedem elektrischen Gerät 7 ein Kühlkörper 9 zugeordnet sein. Dabei ist jedes elektrische Gerät 7 zwischen den Schenkeln 19 des entsprechenden Kühlkörpers 9 angeordnet, so dass das elektrische Gerät 7 U-förmig von dem Kühlkörper 9 umschlossen wird. Vorzugsweise berühren sich die Schenkel 19 benachbarter Kühlkörper 9 im bestimmungsgemäß an der Tragschiene 5 befestigten Zustand, so dass die Schenkel 19 benachbarter Kühlkörper 9 flächig aneinander anliegen. In Figur 4C ist eine weitere Variante dargestellt, gemäß welcher alternierend jeweils ein elektrisches Gerät 7 mit einem das elektrische Gerät U-förmig umgebenden Kühlkörper 9 und ein weiteres elektrisches Gerät 7 ohne Kühlkörper an der Tragschiene angeordnet sind. Die elektrischen Geräte 7 ohne Kühlkörper 9 liegen dabei mit ihren Seiten 70a, 70b flächig an den Schenkeln 19 der benachbarten Kühlkörper 9 an.

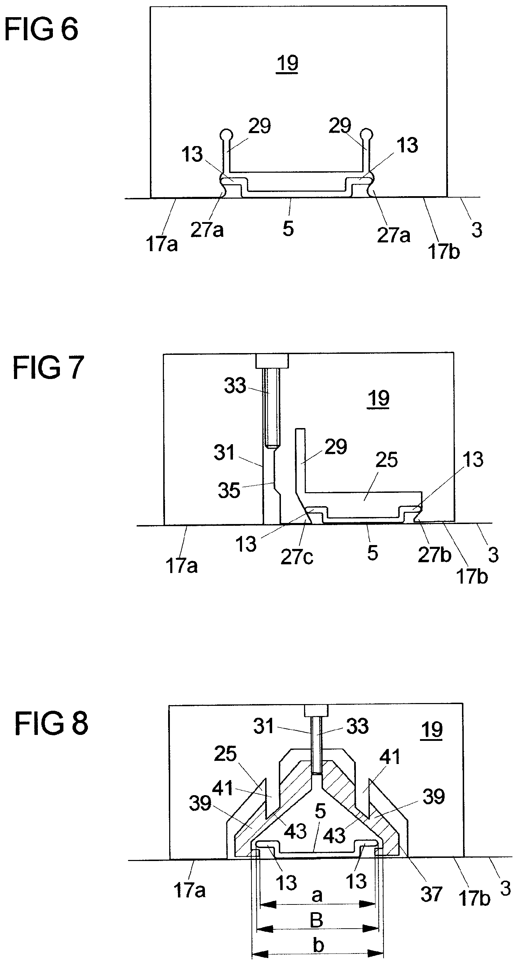

In Figur 5 sind zwei Kühlkörper 9 gemäß einer zweiten Ausführungsform zusammen mit elektrischen Geräten 7 in alternierender Anordnung in einer Ansicht von unten dargestellt. Die Kühlkörper 9 und die elektrischen Geräte 7 sind an der Tragschiene 5 befestigt, die wiederum an der Wand 3 festgelegt ist. Zur Befestigung der Kühlkörper 9 an der Tragschiene 5 sind verschiedene Alternativen vorgesehen, die in den Figuren 6 bis 8 dargestellt sind und weiter unten näher beschrieben werden.

Der Kühlkörper 9 gemäß der zweiten Ausführungsform weist eine Basisseite 17 und einen hiervon abstehenden Schenkel 19 auf. Der Schenkel 19 erstreckt sich im Wesentlichen über die gesamte Länge und die gesamte Breite der Basisseite 17, so dass die Basisseite 17 und der Schenkel 19 zusammen einen (quaderförmigen) Kühlkörper 9 mit I-förmigem Querschnitt bilden. Der Schenkel 19 hat zwei Außenseiten, die sich von den Längskanten 21 der Basisseite 17 erstrecken und über die der Kühlkörper 9 in direktem thermischen Kontakt mit zwei benachbarten elektrischen Geräten 7 steht, wenn der Kühlkörper 9 und die elektrischen Geräte 7 bestimmungsgemäß zueinander an einer Tragschiene angeordnet sind. Der (blockförmige) Kühlkörper 9 gemäß der zweiten Ausführungsform kann massiv oder hohl sein. Im Fall eines massiv ausgebildeten (blockförmigen) Kühlkörpers 9 wird der Kühlkörper zum Beispiel von einer Metallplatte mit einer Wandstärke von 2 bis 8 mm, vorzugsweise von 3 bis 7 mm, gebildet.

Über die Basisseite 17 ist der Kühlkörper 9 an der Tragschiene 5 befestigbar. In der Basisseite 17 ist hierzu eine Ausnehmung 25 vorgesehen, die der Aufnahme der Tragschiene 5 dient. Die Ausnehmung 25 kann abhängig von der Art der Befestigung des Kühlkörpers 9 an der Tragschiene 5 jeweils unterschiedlich ausgebildet sein. Die Ausnehmung 25 des Kühlkörpers 9 ist dabei so angeordnet, dass sie die Basisseite 17 in zwei Kontaktbereiche 17a, 17b unterteilt. Über die beiden Kontaktbereiche 17a, 17b liegt der Kühlkörper 9 jeweils flächig an der Wand 3 an, wenn der Kühlkörper 9 bestimmungsgemäß an der Tragschiene 5 befestigt ist, die wiederum an der Wand 3 festgelegt ist. Damit befindet sich der Kühlkörper 9 in direktem thermischem Kontakt mit der Wand 3.

Gemäß der in Figur 6 dargestellten Variante ist der Kühlkörper 9 mittels eines Schnappmechanismus an der Tragschiene 5 befestigbar. Hierzu ist die Ausnehmung 25 in Längsrichtung der Basisseite 17 von Vorsprüngen 27a begrenzt, die von den Kontaktbereichen 17a, 17b in die Ausnehmung 25 hineinragen. Die Vorsprünge 27a sind federnd ausgebildet. Für eine federnde Ausgestaltung der Vorsprünge 27a ist für jeden Vorsprung eine schlitzförmige Aussparung 29 vorgesehen, die sich von der Ausnehmung 25 in den Kühlkörper 9 hinein (über die gesamte Breite des Kühlkörpers 9) erstreckt. Die schlitzförmigen Aussparungen 29 sind dabei jeweils am Übergang der Ausnehmung 25 zu den Kontaktbereichen 17a, 17b angeordnet. Alternativ kann in Anlehnung an die Ausführungsform in Figur 3 - in Längsrichtung der Basisseite 17 betrachtet - vor und hinter jedem Vorsprung 27a eine schlitzförmige Aussparung 29 vorgesehen sein. Das Befestigungsprinzip der Figur 6 entspricht dem des Kühlkörpers 9 gemäß der ersten Ausführungsform (wie in den Figuren 2 und 3 dargestellt).

Neben den Kontaktbereichen 17a, 17b liegt der Kühlkörper 9 auch über die Vorsprünge 27a flächig zur Wärmeableitung an der Wand 3 an, wenn der Kühlkörper 9 bestimmungsgemäß an der Tragschiene 5 befestigt ist.

Eine Schraubbefestigung ist in Figur 7 gezeigt. Hier sind - in Längsrichtung der Basisseite 17 betrachtet - aufeinanderfolgend eine Ausnehmung 25 und eine Durchgangsbohrung 31 vorgesehen. Die Ausnehmung 25 dient der Aufnahme der Tragschiene 5. Sie wird an ihrer der Durchgangsbohrung 31 abgewandten Seite von einem ersten Vorsprung 27b begrenzt, der - in Längsrichtung der Basisseite 17 betrachtet - in Richtung der Durchgangsbohrung 31 in die Ausnehmung 25 hineinragt. Der erste Vorsprung 27 b ist starr ausgebildet. An der gegenüberliegenden, der Durchgangsbohrung 31 zugewandten Seite der Ausnehmung 25 ist ein zweiter Vorsprung 27c vorgesehen, der zwischen der Durchgangsbohrung 31 und einer schlitzförmigen Aussparung 29 angeordnet ist. Der zweite Vorsprung 27c ist als federnder Finger ausgebildet. Die schlitzförmige Aussparung 29 erstreckt sich von der Ausnehmung 25 in den Kühlkörper 9 hinein über dessen gesamte Breite und ist an dem längsseitigen Ende der Ausnehmung 25 angeordnet, das dem starren Vorsprung 27b gegenüberliegt.

Die Durchgangsbohrung 31 erstreckt sich von der Basisseite 17 bis zu einer der Basisseite 17 gegenüberliegenden Seite des Kühlkörpers 9 und ist von der Aussparung 29 beabstandet. Von der der Basisseite 17 gegenüberliegenden Seite des Kühlkörpers 9 ist ein Bedienelement 33 zugänglich, das in der Durchgangsbohrung 31 angeordnet ist. Das Bedienelement 33 kann als eine Schraube ausgeführt sein, die in der Durchgangsbohrung 31 beweglich aufgenommen ist. In der Durchgangsbohrung 31 ist ferner eine Ausstülpung 35 vorgesehen, die von der Innenwand der Durchgangsbohrung 31 radial in die Durchgangsbohrung 31 ragt. Dabei ist die Ausstülpung 35 so angeordnet, dass das Bedienelement 33 mit der Ausstülpung 35 zusammenwirken kann, wenn das Bedienelement 33 in der Durchgangsbohrung 31 betätigt wird. Zur Befestigung des Kühlkörpers 9 an der Tragschiene 5 wird der Kühlkörper 9 so angeordnet, dass der Vorsprung 27b den einen Tragsteg 13 der Tragschiene 5 hintergreift. Indem das Bedienelement 33 gegen die Ausstülpung 35 gedrückt wird, wird der federnde Vorsprung 27c in die Ausnehmung 25 hinein bewegt, wodurch der federnde Vorsprung 27c den anderen Tragsteg 13 der Tragschiene 5 hintergreifen kann. Der Kühlkörper 9 ist dann an der Tragschiene 5 durch den ersten Vorsprung 27b und den zweiten Vorsprung 27c festgelegt, welche die Tragschiene 5 hintergreifen. Die Kontaktbereiche 17a, 17b der Basisseite 17 des Kühlkörpers 9 und die Vorsprünge 27b, 27c liegen dann wärmeleitend direkt an der Wand 3 an.

Durch eine Bewegung des Bedienelements 33 in der Durchgangsbohrung 31 in eine Richtung, die der zur Befestigung dienenden Bewegungsrichtung entgegengesetzt ist, bewegt sich der zweite Vorsprung 27c zurück in seine Ausgangsposition (ohne Einwirkung äußerer Kräfte). Hierdurch kann der Kühlkörper 9 wieder von der Tragschiene 5 gelöst werden.

In Figur 8 ist ein Kühlkörper 9 dargestellt, der mittels einer Klammer 37 an der Tragschiene 5 befestigt ist. Die Klammer 37 ist in der Ausnehmung 25 bewegbar angeordnet, in welcher die Tragschiene 5 aufgenommen ist. Sie weist zwei Arme 39 auf, die sich in einem Winkel zueinander erstrecken, so dass die Klammer 37 an einer Seite, an der die Arme 39 maximal voneinander beabstandet sind, geöffnet ist. Der Winkel ist dabei kleiner als 180°. An dem der geöffneten Seite der Klammer 37 zugewandten Ende jedes Arms 39 ist ein Vorsprung 40 zum Hintergreifen der Tragstege 13 der Tragschiene 5 vorgesehen. Die Vorsprünge 40 ragen dazu in den von der Klammer 37 gebildeten Aufnahmebereich hinein. Mittels eines Bedienelements 33, das in einer Durchgangsbohrung 31 angeordnet ist, die sich von der Ausnehmung 25 bis zu der der Basisseite 17 abgewandten Seite des Kühlkörpers 9 erstreckt, ist die Klammer 37 in der Ausnehmung 25 entlang der Erstreckungsrichtung der Durchgangsbohrung 31 verschiebbar. Durch Betätigen des Bedienelements 33 kann die Klammer 33 von der Rückwand 3 wegbewegt werden, wodurch der Kühlkörper 9 an die Wand 3 gepresst wird, so dass die Kontaktbereiche 17a, 17b der Basisseite 17 an der Wand 3 anliegen und in direktem thermischen Kontakt mit der Wand 3 stehen. Durch entgegengesetztes Bewegen des Bedienelementes 33 kann der Kühlkörper 9 wieder von der Tragschiene 5 gelöst werden. Um zu verhindern, dass sich die Klammer 37 in der Ausnehmung 25 verdreht, beispielsweise während des Betätigens des Bedienelements 33, ist ein Verdrehschutz 41 vorgesehen. Der Verdrehschutz 41 erstreckt sich von dem Kühlkörper 9 entlang der Erstreckungsrichtung der Durchgangsbohrung 31 in entsprechende in den Armen 39 vorgesehene Vertiefungen 43. Der Verdrehschutz 41 kann durch Laschen oder Führungsstifte gebildet werden. Vorzugsweise ist für jeden Arm 39 der Klammer 37 ein Verdrehschutzelement vorgesehen.

Der in Figur 8 dargestellte Kühlkörper 9 kann von vorne (das heißt in diesem Zusammenhang in Richtung auf die Wand 3 zu, quer zur Erstreckungsrichtung der Tragschiene 5) auf die Tragschiene 5 gesteckt werden. Zum Aufstecken des Kühlkörpers 9 ist das Verhältnis der Breite B der Tragschiene 5, des Abstandes a der Vorsprünge 40 voneinander und des Abstandes b der Arme 39 voneinander unmittelbar hinter den Vorsprüngen 40 (siehe Figur 8) so zu wählen, dass (a+b)/2 ungefähr der Breite B entspricht. Somit ist die Tragschiene 5 etwas breiter als der Abstand a zwischen den Vorsprüngen 40 und etwas schmaler als der Abstand b der Arme 39 unmittelbar hinter den Vorsprüngen 40, also in dem Bereich der Klammer 37, in der die Tragstege 13 der Tragschiene 5 die Vorsprünge 40 hintergreifen. Beim Aufstecken des Kühlkörpers 9 wird der Kühlkörper 9 so gehalten, dass zunächst der eine Tragsteg 13 der Tragschiene 5 den einen Arm 39 der Klammer 37 hintergreifen kann. Anschließend wird die Basisseite 17 des Kühlkörpers 9 parallel zu der Rückwand 3 ausgerichtet und dabei derart parallel zu der Rückwand verschoben, dass der andere Tragsteg 13 der Tragschiene 5 in die Klammer 37 gleiten und den anderen Arm 39 der Klammer 37 hintergreifen kann. Anschließend kann der Kühlkörper 9 wie zuvor beschrieben mittels des Bedienelements 33 an die Rückwand 3 angepresst werden.

Alternativ kann der Kühlkörper 9 aus Figur 8 entlang der Längserstreckung der Tragschiene 5 auf diese aufgeschoben werden.

Der Kühlkörper 9 aus Figur 6 hat eine Wandstärke von 0,5 bis 1,5 mm, vorzugsweise von 1,0 mm. Die Kühlkörper aus den Figuren 7 und 8 haben jeweils eine Wandstärke von 3 bis 7 mm, vorzugsweise von 5 mm.

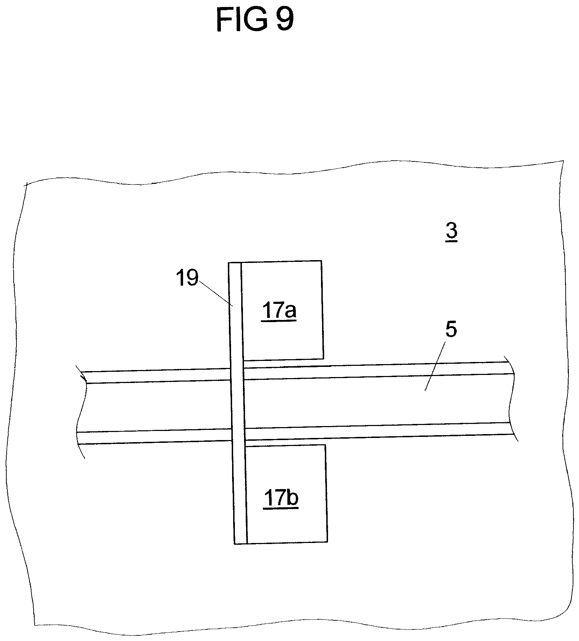

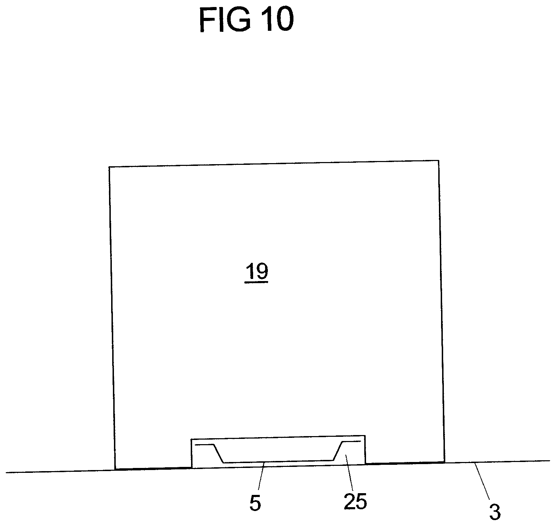

In den Figuren 9 und 10 ist eine dritte Ausführungsform des Kühlkörpers 9 zusammen mit einer Tragschiene 5, die an einer Wand 3 befestigt ist, dargestellt. Der Kühlkörper 9 umfasst eine Basisseite 17, in der eine Ausnehmung 25 vorgesehen ist (Figur 10). Die Ausnehmung 25 dient der Aufnahme der Tragschiene 5. Die Form der Ausnehmung 25 ist dementsprechend so gewählt, dass die Tragschiene 5 in die Ausnehmung 25 passt. Die Ausnehmung 25 unterteilt die Basisseite 17 in zwei beabstandete Kontaktbereiche 17a, 17b, die jeweils in direktem thermischen Kontakt mit der Wand 3 stehen. Die Basisseite 17 des Kühlkörpers 9 ist zudem an der Wand 3 befestigt. Beispielsweise sind die Kontaktbereiche 17a, 17b an die Rückwand geschraubt.

Von der Basisseite 17 erstreckt sich ein Schenkel 19 über die gesamte Länge der Basisseite 17. Der Schenkel 19 ist an einer Längskante 21 der Basisseite 17 angeordnet, so dass der Kühlkörper 9 einen L-förmigen Querschnitt aufweist. Das elektrische Gerät 7 ist so an der Tragschiene 5 anordenbar, dass es in flächigem Kontakt mit den Kontaktbereichen 17a, 17b der Basisseite 17 und mit dem Schenkel 19 des Kühlkörpers 9 steht.

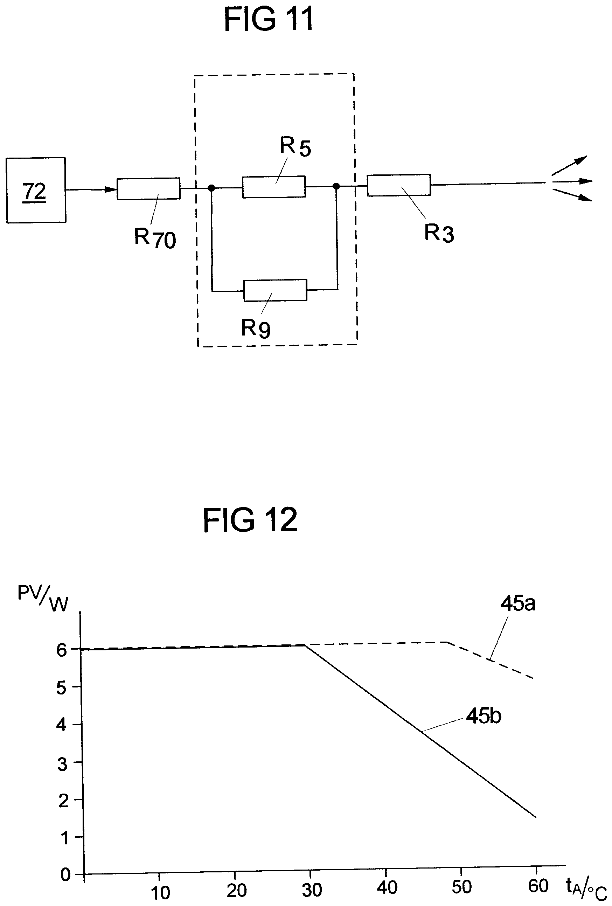

In Figur 11 ist ein Ersatzschaltbild mit der wärmeerzeugenden Komponente 72 und den Wärmewiderständen des Gehäuses 70 des elektrischen Geräts 7 ($R_{70}$), der Tragschiene 5 ($R_5$), des Kühlkörpers 9 ($R_9$) und der Wand 3 ($R_3$) dargestellt, das sich auf die vorbeschriebenen Ausführungsformen der Erfindung bezieht. Das Schaltbild verdeutlicht, dass die Wärme, die durch die wärmeerzeugende Komponente 72 des elektrischen Geräts 7 erzeugt wird, über das Gehäuse 70 sowohl an die Tragschiene 5 als auch an den Kühlkörper 9 abgegeben wird, die wiederum beide die Wärme an die Wand 3 abgeben.

In allen Ausführungsformen ist der Wärmewiderstand des Kühlkörpers ($R_9$) kleiner als der Wärmewiderstand der Tragschiene ($R_5$). Insbesondere kann der Wärmewiderstand des Kühlkörpers ($R_9$) kleiner oder gleich dem 0,1- bis 0,5-fachen des Wärmewiderstands der Tragschiene ($R_5$) sein. Der Wärmewiderstand der Tragschiene ($R_5$) und der Wärmewiderstand des Kühlkörpers ($R_9$) ergeben einen Gesamtwärmewiderstand

$$R_{Gesamt} = \frac{R_5 \cdot R_9}{R_5 + R_9}.$$

Der Umstand, dass Wärme von dem Kühlkörper 9 direkt an die Wand 3 abgegeben werden kann, wirkt sich auf die sogenannte Deratingkurve eines elektrischen Geräts 7 aus, das in einer Vorrichtung der vorstehend anhand von Ausführungsbeispielen beschriebenen Art angeordnet ist. Die Deratingkurve beschreibt, wie sich die Wärmeleistung PV eines elektrischen Geräts 7 in Abhängigkeit von der Umgebungstemperatur $t_A$ ändert. In Figur 12 ist beispielhaft die Deratingkurve 45a eines elektrischen Geräts 7, das in eine erfindungsgemäß ausgestaltete Vorrichtung mit einem Kühlkörper 9 eingebaut ist, gestrichelt dargestellt. Im Vergleich dazu ist mit durchgezogener Linie die Deratingkurve 45b desselben elektrischen Geräts dargestellt, wenn dieses in einer vergleichbaren Vorrichtung ohne Kühlkörper angeordnet ist. Die erfindungsgemäße Vorrichtung ermöglicht demnach, das elektrische Gerät bei wesentlich höherer Umgebungstemperatur ohne Leistungsverlust zu betreiben als die herkömmliche Vorrichtung.

**Patentansprüche**

1. Vorrichtung zur Aufnahme elektrischer Geräte (7), umfassend

   - eine Wand (3),
   - mindestens eine an der Wand (3) befestigte Tragschiene (5), an welcher die elektrischen Geräte (7) anzuordnen sind, und
   - mindestens einen Kühlkörper (9) zum Kühlen mindestens eines der elektrischen Geräte (7),

   wobei der Kühlkörper (9) in thermischem Kontakt mit dem einen elektrischen Gerät (7) steht, wenn das elektrische Gerät (7) bestimmungsgemäß an der Tragschiene (5) angeordnet ist, wobei der Kühlkörper (9) zudem an der Wand (3) anliegt, **dadurch gekennzeichnet, dass** der Kühlkörper (9) mit einer Basisseite (17) flächig an der Wand (3) anliegt, dass der Kühlkörper (9) eine an der Basisseite (17) ausgebildete Ausnehmung (25) aufweist, die zur Aufnahme der Tragschiene (5) vorgesehen ist, **dass** die Ausnehmung (25) die Basisseite (17) in zwei voneinander beabstandete Kontaktbereiche (17a, 17b) unterteilt, über die der Kühlkörper (9) jeweils an der Wand (3) anliegt.

2. Vorrichtung nach Anspruch 1, **dadurch gekennzeichnet, dass** der Kühlkörper (9) direkt an der Wand (3) anliegt und in direktem thermischen Kontakt mit der Wand (3) steht.

**3.** Vorrichtung nach Anspruch 1, **dadurch gekennzeichnet, dass** der Kühlkörper (9) über eine Wärmeleitpaste, einen Wärmeleitkleber oder ein Wärmeleitpad an der Wand (3) anliegt und hierüber in thermischem Kontakt mit der Wand (3) steht.

**4.** Vorrichtung nach einem der Ansprüche 1 bis 3, **dadurch gekennzeichnet, dass** der Kühlkörper (9) an der Tragschiene (5) und/oder der Wand (3) befestigt ist.

**5.** Vorrichtung nach Anspruch 4, **dadurch gekennzeichnet, dass** der Kühlkörper (9) über die Basisseite (17) an der Wand (3) befestigt ist.

**6.** Vorrichtung nach einem der vorhergehenden Ansprüche, **dadurch gekennzeichnet, dass** der Kühlkörper (9) mindestens einen Schenkel (19) aufweist, der von der Basisseite (17) absteht und über den der Kühlkörper (9) mit dem einen elektrischen Gerät (7) in thermischem Kontakt steht, wenn das elektrische Gerät (7) bestimmungsgemäß an der Tragschiene (5) angeordnet ist.

**7.** Vorrichtung nach Anspruch 6, **dadurch gekennzeichnet, dass** sich die Ausnehmung (25) in den mindestens einen Schenkel (19) hinein erstreckt.

**8.** Vorrichtung nach Anspruch 6 oder 7, **dadurch gekennzeichnet, dass** der Schenkel (19) und die Basisseite (17) einen im Querschnitt L-förmigen Kühlkörper (9) bilden.

**9.** Vorrichtung nach einem der Ansprüche 6 oder 7, **dadurch gekennzeichnet, dass** der Kühlkörper (9) zwei Schenkel (19) aufweist, die zusammen mit der Basisseite (17) eine im Querschnitt U-förmigen Kühlkörper bilden.

**10.** Vorrichtung nach Anspruch 9, **dadurch gekennzeichnet, dass** das elektrische Gerät (7) derart zwischen den Schenkeln (19) anzuordnen ist, dass es mit jedem der beiden Schenkel (19) in thermischem Kontakt steht.

**11.** Vorrichtung nach einem der Ansprüche 9 oder 10, **dadurch gekennzeichnet, dass** die Schenkel (19) Vorsprünge (27a) aufweisen, die in die Ausnehmung (25) ragen und die die Tragschiene (5) zur Befestigung des Kühlkörpers (9) an der Tragschiene (5) hintergreifen.

**Claims**

**1.** Device for receiving electric apparatuses (7), comprising

- a wall (3),
- at least one support rail (5) which is fastened to the wall (3) and on which the electric apparatuses (7) are to be disposed, and
- at least one heat sink (9) for cooling at least one of the electric apparatuses (7),

wherein the heat sink (9) is in thermal contact with the one electric apparatus (7) when the electric apparatus (7) is disposed according to the intended use on the support rail (5),
wherein the heat sink (9) moreover bears on the wall (3),
**characterized in that**
the heat sink (9) by way of a base side (17) bears in a planar manner on the wall (3), **in that** the heat sink (9) has a clearance (25) which is configured on the base side (17) and which is provided for receiving the support rail (5), and **in that** the clearance (25) subdivides the base side (17) into two mutually spaced apart contact regions (17a, 17b) by way of which the heat sink (9) bears in each case on the wall (3).

**2.** Device according to Claim 1, **characterized in that** the heat sink (9) bears directly on the wall (3) and is in thermal contact with the wall (3).

**3.** Device according to Claim 1, **characterized in that** the heat sink (9) bears on the wall (3) by way of a heat-conducting paste, a heat-conducting adhesive, or a heat-conducting pad, and is in thermal contact with the wall (3) by way of said heat-conducting paste, said heat-conducting adhesive, or said heat-conducting pad.

**4.** Device according to one of Claims 1 to 3, **characterized in that** the heat sink (9) is fastened to the support rail (5) and/or the wall (3) .

**5.** Device according to Claim 4, **characterized in that** the heat sink (9) is fastened to the wall (3) by way of the base side (17).

**6.** Device according to one of the preceding claims, **characterized in that** the heat sink (9) has at least one leg (19) which projects from the base side (17) and by way of which the heat sink (9) is in thermal contact with the one electric apparatus (7) when the electric apparatus (7) is disposed according to the intended use on the support rail (5) .

**7.** Device according to Claim 6, **characterized in that** the clearance (25) extends into the at least one leg (19).

**8.** Device according to Claim 6 or 7, **characterized in that** the leg (19) and the base side (17) form a heat sink (9) that in the cross section is L-shaped.

9. Device according to one of Claims 6 or 7, **characterized in that** the heat sink (9) has two legs (19) which conjointly with the base side (17) form a heat sink that in the cross section is U-shaped.

10. Device according to Claim 9, **characterized in that** the electric apparatus (7) is to be disposed between the legs (19) in such a manner that said electric apparatus (7) is in thermal contact with each of the two legs (19).

11. Device according to one of Claims 9 or 10, **characterized in that** the legs (19) have protrusions (27a) which protrude into the clearance (25) and which for fastening the heat sink (9) to the support rail (5) engage behind the support rail (5).

**Revendications**

1. Dispositif de réception d'appareils électriques (7), comprenant :

    - une paroi (3),
    - au moins un rail de support (5) fixé à la paroi (3), sur lequel doivent être disposés les appareils électriques (7), et
    - au moins un corps de refroidissement (9) pour refroidir au moins l'un des appareils électriques (7),

    le corps de refroidissement (9) étant en contact thermique avec ledit un appareil électrique (7) lorsque l'appareil électrique (7) est disposé sur le rail de support (5) de manière conforme aux prescriptions,
    le corps de refroidissement (9) s'appliquant en outre contre la paroi (3),
    **caractérisé en ce que**
    le corps de refroidissement (9) s'applique avec une face de base (17) à plat contre la paroi (3), le corps de refroidissement (9) présente un évidement (25) réalisé au niveau de la face de base (17), lequel est prévu pour recevoir le rail de support (5), et **en ce que** l'évidement (25) divise la face de base (17) en deux régions de contact espacées l'une de l'autre (17a, 17b) par le biais desquelles le corps de refroidissement (9) s'applique à chaque fois contre la paroi (3).

2. Dispositif selon la revendication 1, **caractérisé en ce que** le corps de refroidissement (9) s'applique directement contre la paroi (3) et est en contact thermique direct avec la paroi (3).

3. Dispositif selon la revendication 1, **caractérisé en ce que** le corps de refroidissement (9) s'applique par le biais d'une pâte thermoconductrice, d'une colle thermoconductrice ou d'une plage thermoconductrice contre la paroi (3) et est en contact thermique avec la paroi (3) par le biais de celle-ci.

4. Dispositif selon l'une quelconque des revendications 1 à 3, **caractérisé en ce que** le corps de refroidissement (9) est fixé au rail de support (5) et/ou à la paroi (3).

5. Dispositif selon la revendication 4, **caractérisé en ce que** le corps de refroidissement (9) est fixé à la paroi (3) par le biais de la face de base (17) .

6. Dispositif selon l'une quelconque des revendications précédentes, **caractérisé en ce que** le corps de refroidissement (9) présente au moins une branche (19) qui fait saillie depuis la face de base (17) et par le biais de laquelle le corps de refroidissement (9) est en contact thermique avec ledit un appareil électrique (7), lorsque l'appareil électrique (7) est disposé sur le rail de support (5) de manière conforme aux prescriptions.

7. Dispositif selon la revendication 6, **caractérisé en ce que** l'évidement (25) s'étend dans l'au moins une branche (19).

8. Dispositif selon la revendication 6 ou 7, **caractérisé en ce que** la branche (19) et la face de base (17) forment un corps de refroidissement (9) de section transversale en forme de L.

9. Dispositif selon l'une quelconque des revendications 6 ou 7, **caractérisé en ce que** le corps de refroidissement (9) présente deux branches (19) qui forment conjointement avec la face de base (17) un corps de refroidissement de section transversale en forme de U.

10. Dispositif selon la revendication 9, **caractérisé en ce que** l'appareil électrique (7) doit être disposé entre les branches (19) de manière à être en contact thermique avec chacune des deux branches (19).

11. Dispositif selon l'une quelconque des revendications 9 ou 10, **caractérisé en ce que** les branches (19) présentent des saillies (27a) qui pénètrent dans l'évidement (25) et qui viennent en prise par l'arrière avec le rail de support (5) pour fixer le corps de refroidissement (9) sur le rail de support (5).

# FIG 1

FIG 2

# FIG 3

## FIG 4A

## FIG 4B

## FIG 4C

## FIG 5

FIG 6

FIG 7

FIG 8

# FIG 9

# FIG 10

# FIG 11

# FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008059320 B4